# EUROPEAN PATENT SPECIFICATION

(11) **EP 4 008 616 B1**
(45) Date of publication and mention of the grant of the patent: **20.09.2023**
(21) Application number: 21210963.1
(22) Date of filing: 29.11.2021
(51) Int. Cl.: B62J 6/03, B62J 6/04

(54) **STRUCTURE OF A BICYCLE HEADLIGHT**
STRUKTUR EINES FAHRRADSCHEINWERFERS
STRUCTURE D'UN PHARE DE BICYCLETTE

(30) Priority: 03.12.2020 IT 202000029606
(43) Date of publication of application: 08.06.2022
(73) Proprietor: Ghini, Paolo, 40065 Pianoro (IT)
(72) Inventor: Ghini, Paolo, 40065 Pianoro (IT)
(74) Representative: Emmi, Mario

(56) References cited:
- EP-A1- 3 521 149
- DE-U1-202017 102 446
- GB-A- 2 574 135
- NZ-A- 567 218
- US-A- 5 379 197

## Description

### Scope of the invention

This invention concerns a headlight structure that can be applied to a bicycle.

Moreover, this invention concerns a bicycle comprising said headlight structure.

### Brief outline of prior art

The headlights applied at the front or at the back of a bicycle are known.

Generally, the front headlight is placed on a superior portion of the front fork of the bicycle in a fixed position, while the rear light is fixed as well and placed on the rear axle, commonly on the rear mudguard.

The front headlight is therefore adapted to project a front beam of light, substantially along a longitudinal direction of the bicycle extension, as well as the rear light is adapted to project a rear beam of light.

However, in some cases, there is the need to use said headlights for projecting the beam of light towards a different direction, such as when the bicycle is parked in order to signal its presence to other vehicles.

Document EP3772448A1 shows the preamble of claim 1.

### Summary of the invention

Therefore, the aim of this invention is to provide a headlight structure which resolves said technical drawbacks, and which is therefore orientable in order to have the function of projection of a beam of light towards a longitudinal direction while riding the bicycle, as well as towards a different direction when the vehicle is parked.

The aim of this invention is also supplying a headlight structure performing a road safety function while riding it in the event of poor visibility, for example under foggy or rainy conditions, and increasing the visibility degree of the bicycle by the other vehicles arriving from the opposite or synchronous way of the traffic direction, or even while cornering.

In particular, the aim of this invention is providing a headlight structure which can be applied to a bicycle as a retrofitting and which is constructively simple, low-cost, lightweight, and aerodynamic.

These and other aims are therefore obtained through the headlight structure, as per claim 1.

Said headlight structure is shaped for being applied to any structural part of the bicycle, for example to a part of the bicycle frame or to the seat tube or any other tube.

The bicycle defines a longitudinal direction of extension.

Said headlight structure comprises:
- An attachment portion shaped to be connected to a part of the bicycle, for example a tube of a bicycle, in a removable manner;
- An arm comprising a first end connected to said attachment portion and a second end whereon a light source is arranged;
- And wherein there are comprised connection means, through which said attachment portion is connectable to said structural part, for example a tube, so that said attachment portion is rotatably connected to said tube, around at least one rotation axis X-X.

Thanks to said solution, in this way, the light source can be oriented around the at least one rotation axis depending on the needs, in order to project a beam of light according to at least two or more different directions.

For example, a regulation of the arm along the longitudinal plane of the bicycle could be possible, and therefore with the arm extending along this direction synchronous to said longitudinal direction of extension of the bicycle.

After a rotation, the arm can be arranged orthogonally with respect to the longitudinal plane of the bicycle.

According to the invention, the connection means provides a couple of tightening elements, such as cable ties of plastic material, arranged in the opposite way to each other, surrounding said attachment portion and the structural part of connection, for example the tube. According to the invention, the tightening elements enable the rotation of the attachment portion with respect to the part to which it is connected, given that they consent a frictional rotation between the attachment portion and the part to which it is connected, for example the tube itself.

The attachment portion is according to the invention a T-shaped tubular.

Advantageously, the attachment portion comprises an upper and a lower groove shaped to house the cable ties at least partially.

If the structural part is the frame or a tube, said parts being cylindrical tubulars like the T-shaped tubular, a frictional contact is substantially created enabling the attachment portion to rotate around the connection part defining the rotation axis.

Advantageously, a covering, for example of a plastic material such as rubber or a similar material, which enables to increase the friction between the attachment portion and the connection part, thus making the rotation steadier, is applied on the structural tubular of connection, for example the tube.

According to the invention, the light source is mounted on the end of said arm according to a mounting configuration selected from:
- The light source is integrated into the arm, or
- The light source is a separated element connected to said arm through connection means, such as screws, quick attachments and the like.

The light, arranged in a proper casing, can be of the rechargeable type, for example by means of a USB plug rechargeable system.

Alternatively, it can be a battery system which has to be replaced when needed.

In an alternative embodiment, it is provided an attachment portion suitable for being connected to the structural part removably, such as the frame or a tube, and a basis portion rotatably connected to said attachment portion around at least one rotation axis, wherein said basis portion comprises said light source, so that said light source can be oriented, with respect to said attachment portion, around said at least one rotation axis for projecting a beam of light according to at least one first direction which is synchronous to said direction of longitudinal extension and a second angularly staggered direction - around said rotation axis - with respect to said direction of longitudinal extension.

Advantageously, said basis portion comprises said arm which comprises a first end connected to said basis portion, and a second end whereon said light source is arranged.

In this manner, the headlight structure, according to this invention, enables to orient the light source towards a different direction with respect to the direction of longitudinal extension of the bicycle, i.e. an alternative direction to a projection of the light that is front or rear.

The possibility to change the positioning direction of the light source is, for example, useful during the stop in order to signal the position of the bicycle which is laterally lightened with respect to its longitudinal extension.

Not claimed is, that the basis portion is rotatably connected to said attachment portion through a rotation pin which defines said rotation axis.

In this manner, the connection through a rotation pin enables the achievement of a positioning, with an angle at 180° or greater, of the light source around the axis defined by the pin.

Preferably, said rotation axis of said pin is oriented, with respect to the development of said part of the bicycle, for example the tube, in a configuration selected from:
- with rotation axis parallel to said structural section, for example the tube;
- with rotation axis orthogonal with respect to said structural section, for example the tube;
- or a combination of them.

In this manner, it is possible to configure a rotation of the light source according to an axis parallel or orthogonal to the attachment part, for example the tube, through the positioning of the rotation pin.

In this manner, the headlight structure is adapted to be applied on a substantially vertical tube, like the seat tube, or on a substantially horizontal tube, as the tube of the bicycle handlebar or on a tubular forming the frame of the bicycle.

Not claimed is, that said basis portion is connected to said attachment portion by a spherical joint.

In this manner, the basis portion can be oriented at 360°, and it can adopt several positions with respect to the attachment portion.

Not claimed is, that said arm is a flexible element structured for being distorted by a user in order to orientate the light source, keeping said distorted configuration.

In this manner, the flexible arm enables to further orient the light source with an equal angular position thereof with respect to the basis portion.

As per another feature of the invention, it is here described a bicycle comprising a headlight structure which is shaped to be applied onto a structural part of the bicycle, for example a tubular of the frame or a tube of said bicycle, said headlight structure comprising:
- An attachment portion shaped to be connected to said part of the bicycle in a removable way;
- A basis portion rotatably connected to said attachment portion around at least one rotation axis,
- And wherein said basis portion comprises a light source, so that said light source can be oriented with respect to said attachment portion around said at least one rotation axis.

It is therefore also described here a bicycle (100) comprising a headlight structure (10) as per one or more of the combinations described above.

A particularly advantageous form of a headlight structure is the following one:

A headlight structure (10) shaped to be applied to the seat tube (101) of the bicycle, said headlight structure (10) comprising:
- An attachment portion (1, 1', 1a, 1b) shaped for being connected to said tube (101) in a removable manner, said attachment portion being in the shape of a T-shaped cylindrical tubular;
- An arm (3) which comprises a first end (3a) connected to said T-shaped tubular and a second end (3b) whereon a light source (5) is applied;
- And wherein said T-shaped tubular is connectable to said tube (101) through connection means (1c) in the shape of cable ties (1d) such that said T-shaped tubular is in contact and fixed to the tube through said cable ties (1d), the coupling between said tube and the T-shaped tubular being a frictional coupling, wherein the T-shaped tubular, fixed in use to the tube through said cable ties, can slither with respect to the tube to which it is connected in use, so as to have a rotation around at least one rotation axis (X-X), so that said light source (5) can be oriented after the rotation of said arm (3) around said at least one rotation axis (X-X), in order to project a beam of light according to at least two different directions (A, B).

### Brief description of the drawings

Further features and advantages of the present headlight structure according to the invention will become apparent from the following description of preferred embodiments thereof, given only by way of non-limiting example, with reference to the attached drawings, wherein:
- Figures 1 and 1A show two lateral views of a bicycle with the applied headlight structure, as per this invention, according to two different positions of application, one in correspondence of the seat tube and the other one on the rear frame of the bicycle, specifically on the tubular of the frame which extends from the back wheel to the under-seat post;
- Figure 2 shows a schematic detailed representation of the seat tube with the applied headlight structure, as per one first embodiment of this invention;
- Figure 2A shows in a perspective view of figure 2 in detail, the attachment portion and the tube connected to each other;
- Figure 2B shows a schematic view of two configurations which the headlight structure can assume, as per this invention;
- Figure 3 shows a schematic detailed view of the seat tube with the headlight structure applied on it, in an alternative embodiment;
- Figures 3A and 3B show in a view from above of the only part concerning the seat the headlight structure applied to the seat tube as per a first position aligned to the longitudinal axis, and a second position angularly staggered with respect to said longitudinal axis;
- Figure 4 shows a lateral view of a first embodiment of the headlight structure providing a single rotation axis to orient the light source with respect to the tube;
- Figure 5 shows a lateral view of a not claimed second embodiment of the headlight structure providing a multi-directional coupling to orient the light source with respect to the tube;
- Figure 5A shows a lateral view of a not claimed third embodiment of the headlight structure providing a spherical joint.

### Description of some preferred embodiments

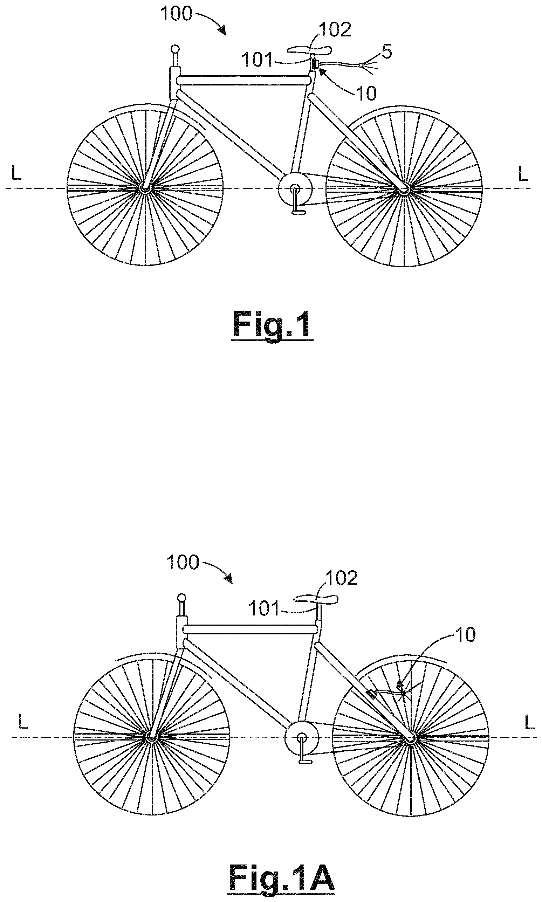

With reference to figures 1 and 1A, a bicycle (100) is shown whereon a headlight structure (10) is arranged, which is shaped to be applied to the tube (101) of said bicycle (100).

The tube (101) is, for example, the tube arranged for supporting a seat (102), as per figure 1, or a portion of the frame, for example the rear one, as per figure 1A.

As an alternative, the tube is the one arranged for supporting the handlebar, or even any part of the bicycle (100) in its front or rear portion to which the headlight structure can be applied.

As a non-limiting example, with reference to figure 1, the headlight structure (10) could be applicable, for example, to a tubular of the frame.

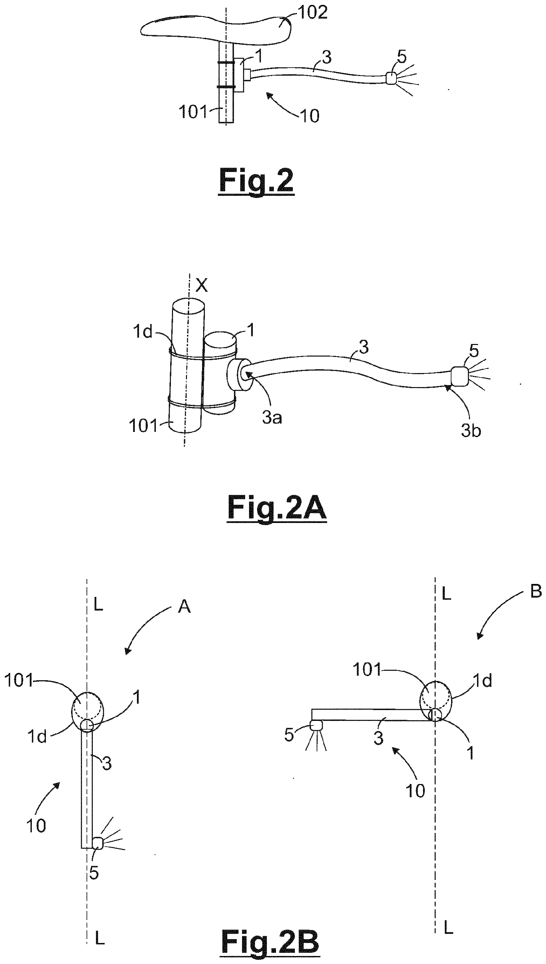

For example, for this purpose, it could be applied to the frame part which moves with a sloped motion from the rear wheel towards the vertical tubular, into which the seat tube is inserted (as shown in figure 1A, for example) . In this case, for example, the structure (10) could be applied advantageously to the free segment of this sloped section of the frame included between the wheel external perimeter and said vertical (or substantially vertical) tubular or, as shown in figure 1A, to the remaining section. In this way, said headlight structure (10) would be in a more rearward position with respect to the one that is explicitly depicted by figures 1 and 2, wherein it is depicted in the under-seat post, thereby not hampering the user's thighs while cycling.

Therefore, the reference figures showing an application in the seat tube, are not to be considered a limitation, but only an example.

In a first preferred embodiment, shown in details in figures 2 and 2A, the headlight (10) comprises an attachment portion (1) shaped to be connected to the tube (101) in a removable way, and an arm (3) which comprises a first end (3a) (figure 2A) connected to the attachment portion (1), and a second end 3b whereon a light source (5) is arranged, or more briefly a light (5). The attachment portion (1) is, for example, T-shaped (figure 2A). In particular, the attachment portion (1) is connected to the tube (101) through connection means (1d), such that the attachment portion is rotatably connected to the tube (101) (figure 2B), around at least one rotation axis X-X.

In that case, referring to figure 2A, the rotation axis is the longitudinal development axis of the tube supporting the seat (102).

Accordingly, the light source (5) is orientable with respect to the tube (101), which identifies the rotation axis X-X (figure 2), to project a beam of light according to at least one first direction A and one second direction B, which is angularly staggered around said rotation axis (figure 2B).

The connection means, for example, provide a couple of tightening elements (1d) (figure 2A), such as cable ties of plastic material, arranged on the opposite part to each other and surrounding the attachment portion (1) and the tube (101) between each other, enabling a frictional rotation between the attachment portion (1) and the tube (101) itself.

In particular, the attachment portion is a T-shaped tubular portion which is positioned into contact with and fixed to the tube by means of the cable ties (1d). Since the tube (101) is circular-shaped, the obtained coupling involves two cylindrical surfaces in frictional contact to each other and connected through the cable ties.

In this way, the rotation of the attachment portion (1) with respect to the tube (101) occurs.

Preferably, the T-shaped attachment portion shown in figure 2A provides an upper and a lower groove (which are not depicted for simplicity's sake), each one is useful for forming a housing line for the cable ties (1d), so as to prevent the cable ties from sliding from their position, while using them, because of vibrations.

In detail, a covering can be applied onto the tube (101), for example, a plastic material such as rubber or similar material, which enables to increase the friction between the attachment portion (1) and the tube (101), making the rotation firmer and fixed, and especially avoiding downward slips of the T-shaped attachment.

The arm (3), even if it is depicted with a wavy shape in figures 1 and 1A, can also be in the shape of a straight arm, as shown in figure 2B.

In all cases, it can be of stiff material, such as plastic.

Light (5) is connected to the end of the arm, and can be integrated into the arm (3) or, preferably, it can be a separated element connected to the arm (3) through connection means, such as screws, quick attachments, and the like. In this last case, light (5) can be removed advantageously from the arm (3), for example because of maintenance services.

The light, arranged into a suitable casing, can be of the rechargeable type, for example by a USB plug recharge system.

Alternatively, it can be a battery system which has to be replaced when needed.

As per the preferred embodiment, the light is arranged so as to project orthogonally to the axis of the arm.

In this way, when the arm rotates to the angular position at 90 degrees with respect to the longitudinal plane of the bicycle, the light beam, in this case, is parallel to said longitudinal plane, thereby being visible to a vehicle which is driving along said plane direction.

Preferably, the light, if it is applied in a removable way to the arm (3), can be applied both onto the right side and onto the left side of the arm (3) so as to be able to orient the light beam towards the rear part of the bicycle in any case, regardless of the rotation way of the arm (3).

In a second embodiment, shown in figures from 3 to 5, the headlight structure (10) comprises the attachment portion (1) formed to be connected in a removable way to the tube (101) of the bicycle (100), in this case, as it is shown in figure 1, the tube supporting the seat (102).

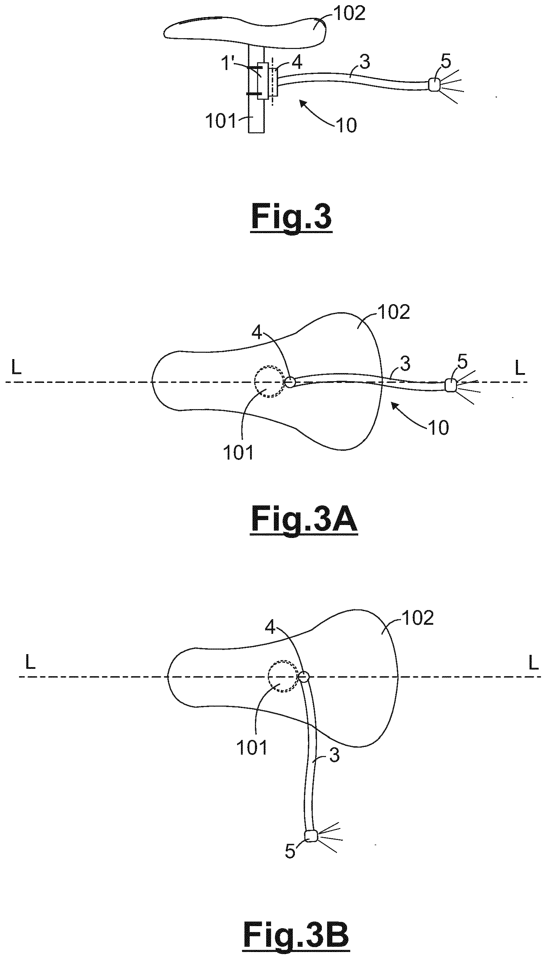

The attachment portion is such as to surround at least partially the tube (101), and to be fixed to it by a connection through cable ties (1d) (figure 3).

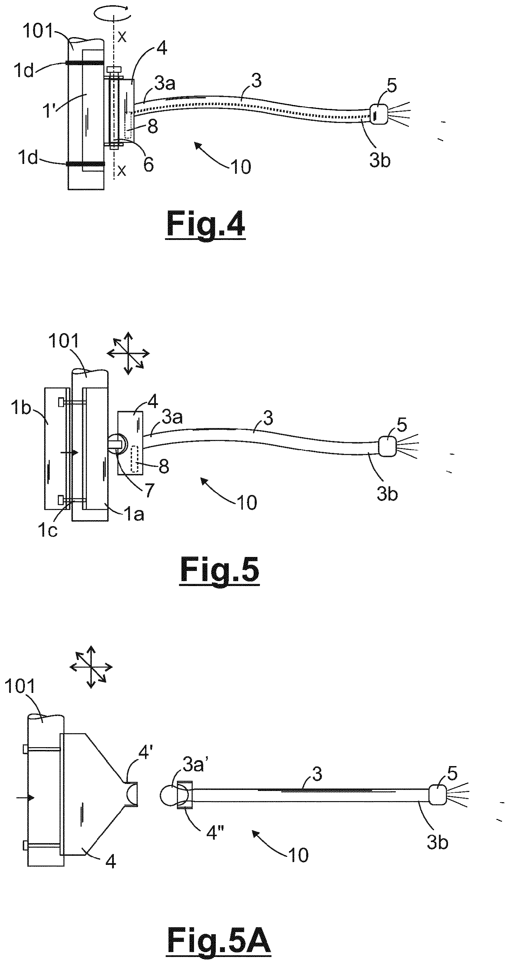

Alternatively, as it is shown in the embodiment of figure 4, the coupling with the tube (101) provides two attachment portions (1a, 1b) which surround from the opposite part the tube (101) between each other. The counterposed attachment portions are tightened to each other, for example through screw elements (1c), in order to obtain a firm connection with the tube (101).

A basis portion (4), which rotates around at least one rotation axis X-X, is rotatably connected to the attachment portion 1. In other words, the basis portion (4) is constrained to the attachment portion (1) so as to enable the rotation of the basis portion (4) with respect to the attachment portion (1).

A light source (5) is arranged onto the basis portion (4). Light source (5) operates as a rear or front headlamp of the bicycle, and it can be oriented around the rotation axis. In this way, the light source can be oriented for example around the longitudinal development L (figure 3A) of the bicycle when it is running (figure 1), and it is instead positioned angularly staggered with respect to the longitudinal development L (figure 3B or 1A) when the bicycle is stopped, for example, in order to signal the presence to any arriving car (figure 1A).

According to the invention, the light source (5) is mounted on an arm (3).

A first end (3a) of the arm is connected to the basis portion (4), while said light source (5) is arranged on a second end (3b).

Not claimed is, that the basis portion (4) is rotatably connected to the attachment portion (1) through a rotation pin (6) which defines a single rotation axis X-X. (Figure 4).

In particular, the basis portion is connected through the pin (6) to the attachment portion, in correspondence of the corresponding attachments integral with it. Accordingly, in the assembled configuration, the basis portion can rotate around pin (6) which defines a rotation axis X-X, parallel to the tube (101).

Alternatively, in an unshown way, the basis portion (4) could be mounted orthogonally to the attachment portion (1), so that the rotation axis X-X is orthogonal with respect to the tube (101).

The arrangement of the pin also enables to disassemble the basis portion (4) from the attachment portion (1), so as to make the headlight structure dismountable. In this case, the headlight structure can, for example, be removed when the bicycle is stopped or when it is not used.

In an not claimed example, shown in figure 5, the basis portion (4) is connected to the attachment portion (1) through a spherical joint (7). The spherical joint (7) comprises a coupling between two male-female spherical portions, and therefore enables to orient the basis portion (4) in a multidirectional way, with respect to the attachment portion (1). In this way, the light source can substantially be oriented according to any direction.

Figure 5A shows another not claimed example with a spherical coupling. In particular, it provides a funnel-shaped basis portion (4), which provides an end (4') with a spherical female coupling portion on the internal part. Moreover, the attachment portion comprises a threading on the external part. The end 3a' of the arm (3) is instead shaped with a spherical male portion, which engages into the spherical female portion. The locking of the two female-male portions occurs through a bush 4" providing a second female coupling portion on the internal part, so as to surround, with the portion of the end 4', the spherical end 3a' of the arm 3 when they are tightened to each other. In this way, arm 3 can be oriented angularly with respect to any direction.

The headlight structure (10) as per this invention, advantageously comprises the arm (3), which extends in a cantilevered way with respect to the basis portion (4). The arm (3) is a flexible element structured to be folded/shaped by a user in order to make it assume the desired position orienting light source (5) to a precise direction. After the deformation, the flexible element keeps the obtained configuration when the user releases it.

In other words, said arm is made, for example, with a plurality of tubular elements joined to each other, and enabling a deformation of the arm after a deformation by a user. The obtained deformation is permanent and static when it is released.

In this way, the flexible arm (3) enables to add further degrees of freedom for the pointing of the light source (5), positioned preferably on the end 3b of it.

Wherein said basis portion houses a battery (8) to give power to said light source (5).

In other constructional features, the light source (5) is, for example, a led source powered by a battery (8), the battery is, for example housed into the basis portion (4).

## Claims

1. A headlight structure (10) shaped to be applied to a part (101) of a bicycle (100), preferably to the tube (101) of the bicycle, said headlight structure (10) comprising:
- An attachment portion (1, 1',1a,1b) shaped to be removably connected to said part (101) of the bicycle (100);
- An arm (3) which comprises a first end (3a) connected to said attachment portion (1) and a second end (3b) on which a light source (5) is arranged;
- And wherein said attachment portion (1) is connectable to the said bicycle part (101) through connection means (1c) such that said attachment portion (1) is rotatably connected to said bicycle part (101) around at least one rotation axis (X-X), so that said light source (5) can be oriented as a consequence of the rotation of said arm (3) around said at least one rotation axis (X-X), to project a beam of light according to at least two different directions (A, B);
**Characterized in that:**
- Said attachment portion is in the shape of a cylindrical T-shaped tubular;
- Wherein said connection means (1c) provide a couple of cable ties (1d) for fixing said cylindrical T-shaped tubular in contact with the said bicycle part (101), said cable ties being arranged on the opposite part to each other and surrounding said attachment portion and the said bicycle part (101) between each other so that, in use, enabling a frictional rotation between the said attachment portion and the said bicycle part (101);
- And wherein said T-shaped tubular is formed by a first cylindrical tubular with a predetermined longitudinal axis and a predetermined longitudinal length from which a second cylindrical tubular branches off from the cylindrical surface of the first cylindrical tubular at a half of the whole longitudinal length of said first cylindrical tubular, the longitudinal axis of the second cylindrical tubular being orthogonal to the longitudinal axis of said first cylindrical tubular from which it branches off, so as to assume said T-shaped form, the said arm (3) having its first end (3a) connected to said second cylindrical tubular.

2. Headlight structure (10) as per claims 1, wherein a covering applicable onto said bicycle part (101) is provided, for example a sheet of plastic material such as rubber or similar material.

3. Headlight structure (10) as per claims 1, wherein said cylindrical T-shaped tubular (1) comprises an upper groove and a lower groove shaped for housing each one at least partially one cable tie (1d).

4. Headlight structure (10) as per any one of the previous claims, wherein said light source (5) is mounted onto the end of said arm (3) according to a mounting configuration selected from:
wherein said light source (5) is integrated into said arm (3);
wherein said light source (5) is a separated element connected to said arm (3) through connection means such as screws, quick attachments and the like.

5. Headlight structure (10) as per any one of the preceding claims, wherein said light source (5) is of the rechargeable type through a USB port or powered by a battery (8), preferably said light source being a led source.

6. A bicycle comprising a headlight structure, as per one or more of the preceding claims, connected to the seat tube.

7. The use of a headlight structure, as per one or more of the preceding claims from 1 to 5, connected to the seat tube of a bicycle.

## Patentansprüche

1. Scheinwerferstruktur (10), die geformt ist, um an einem Teil (101) eines Fahrrads (100), vorzugsweise am Rohr (101) des Fahrrads, angebracht zu werden, wobei die Scheinwerferstruktur (10) Folgendes umfasst:
- einen Befestigungsabschnitt (1, 1', 1a, 1b), der so geformt ist, dass er lösbar mit dem Teil (101) des Fahrrads (100) verbunden ist;
- einen Arm (3), der ein erstes Ende (3a), das mit dem Befestigungsabschnitt (1) verbunden ist, und ein zweites Ende (3b) umfasst, an dem eine Lichtquelle (5) angeordnet ist;
- und wobei der Befestigungsabschnitt (1) durch Verbindungsmittel (1c) mit dem Fahrradteil (101) verbindbar ist, so dass der Befestigungsabschnitt (1) um mindestens eine Drehachse (X-X) drehbar mit dem Fahrradteil (101) verbunden ist, so dass die Lichtquelle (5) als Folge der Drehung des Arms (3) um die mindestens eine Drehachse (X-X) ausgerichtet werden kann, um einen Lichtstrahl gemäß mindestens zwei verschiedenen Richtungen (A, B) zu projizieren;
**dadurch gekennzeichnet, dass:**
- der Befestigungsabschnitt die Form einer zylindrischen T-förmigen Röhre aufweist;
- wobei die Verbindungsmittel (1c) ein Paar Kabelbinder (1d) zum Fixieren der zylindrischen T-förmigen Röhre in Kontakt mit dem Fahrradteil (101) bereitstellen, wobei die Kabelbinder auf dem gegenüberliegenden Teil zueinander angeordnet sind und den Befestigungsabschnitt und den Fahrradteil (101) zwischen einander umgeben, so dass im Gebrauch eine Reibungsdrehung zwischen dem Befestigungsabschnitt und dem Fahrradteil (101) ermöglicht wird;
- und wobei die T-förmige Röhre durch eine erste zylindrische Röhre mit einer vorbestimmten Längsachse und einer vorbestimmten Längsrichtung gebildet ist, von der eine zweite zylindrische Röhre von der zylindrischen Oberfläche der ersten zylindrischen Röhre bei einer Hälfte der gesamten Längsrichtung der ersten zylindrischen Röhre abzweigt, wobei die Längsachse der zweiten zylindrischen Röhre orthogonal zur Längsachse der ersten zylindrischen Röhre ist, von der sie abzweigt, um die T-förmige Form anzunehmen, wobei das erste Ende (3a) des Arms (3) mit der zweiten zylindrischen Röhre verbunden ist.

2. Scheinwerferstruktur (10) nach Anspruch 1, wobei eine Abdeckung, die auf dem Fahrradteil (101) aufbringbar ist, zum Beispiel eine Folie aus Kunststoffmaterial wie Gummi oder ähnlichem Material, vorgesehen ist.

3. Scheinwerferstruktur (10) nach Anspruch 1, wobei die zylindrische T-förmige Röhre (1) eine obere Nut und eine untere Nut umfasst, die so geformt sind, dass sie jeweils mindestens teilweise einen Kabelbinder (1d) aufnehmen.

4. Scheinwerferstruktur (10) nach einem der vorhergehenden Ansprüche, wobei die Lichtquelle (5) am Ende des Arms (3) gemäß einer Montagekonfiguration montiert ist, die ausgewählt ist aus:
wobei die Lichtquelle (5) in den Arm (3) integriert ist;
wobei die Lichtquelle (5) ein getrenntes Element ist, das durch Verbindungsmittel wie Schrauben, Schnellbefestigungen und dergleichen mit dem Arm (3) verbunden ist.

5. Scheinwerferstruktur (10) nach einem der vorhergehenden Ansprüche, wobei die Lichtquelle (5) vom wiederaufladbaren Typ über einen USB-Anschluss ist oder durch eine Batterie (8) mit Strom versorgt wird, wobei die Lichtquelle vorzugsweise eine LED-Quelle ist.

6. Fahrrad mit einer Scheinwerferstruktur nach einem oder mehreren der vorhergehenden Ansprüche, die mit dem Sitzrohr verbunden ist.

7. Verwendung einer Scheinwerferstruktur nach einem oder mehreren der vorhergehenden Ansprüche 1 bis 5, die mit dem Sitzrohr eines Fahrrads verbunden ist.

## Revendications

1. Structure de phare (10) formée pour être appliquée sur une partie (101) d'une bicyclette (100), de préférence sur le tube (101) de la bicyclette, ladite structure de phare (10) comprenant :
- Une portion de fixation (1, 1', 1a, 1b) formée pour être reliée de manière amovible à ladite partie (101) de la bicyclette (100) ;
- Un bras (3) qui comprend une première extrémité (3a) reliée à ladite portion de fixation (1) et une seconde extrémité (3b) sur laquelle une source de lumière (5) est agencée ;
- Et dans laquelle ladite portion de fixation (1) est apte à être reliée à ladite partie de bicyclette (101) par le biais de moyens de liaison (1c) de sorte que ladite portion de fixation (1) soit reliée de manière rotative à ladite partie de bicyclette (101) autour d'au moins un axe de rotation (X-X), de sorte que ladite source de lumière (5) puisse être orientée en conséquence de la rotation dudit bras (3) autour dudit au moins un axe de rotation (X-X), pour projeter un faisceau de lumière selon au moins deux directions différentes (A, B) ;
**Caractérisée en ce que :**
- Ladite portion de fixation se présente sous la forme d'un tube cylindrique en forme de T ;
- Dans laquelle lesdits moyens de liaison (1c) fournissent un couple de serre-câbles (1d) pour la fixation dudit tube cylindrique en forme de T en contact avec ladite partie de bicyclette (101), lesdits serre-câbles étant agencés sur la partie opposée l'un à l'autre et en encerclant ladite portion de fixation et ladite partie de bicyclette (101) entre l'un et l'autre de sorte qu'ils permettent, en utilisation, une rotation par friction entre ladite portion de fixation et ladite partie de bicyclette (101) ;
- Et dans laquelle ledit tube en forme de T est constitué d'un premier tube cylindrique, ayant un axe longitudinal prédéterminé et une longueur longitudinale prédéterminée, à partir duquel un second tube cylindrique se ramifie à partir de la surface cylindrique du premier tube cylindrique à la moitié de la longueur longitudinale totale dudit premier tube cylindrique, l'axe longitudinal du second tube cylindrique étant orthogonal à l'axe longitudinal dudit premier tube cylindrique à partir duquel il se ramifie, de façon à adopter ladite forme en T, ledit bras (3) ayant sa première extrémité (3a) reliée audit second tube cylindrique.

2. Structure de phare (10) selon la revendication 1, dans laquelle une protection applicable sur ladite partie de bicyclette (101) est ménagée, par exemple une feuille de matière plastique telle que du caoutchouc ou une matière similaire.

3. Structure de phare (10) selon la revendication 1, dans laquelle ledit tube cylindrique en forme de T (1) comprend une rainure supérieure et une rainure inférieure formées pour la réception dans chacune, au moins partiellement, d'un serre-câble (1d).

4. Structure de phare (10) selon l'une quelconque des revendications précédentes, dans laquelle ladite source de lumière (5) est montée sur l'extrémité dudit bras (3) selon une configuration de montage sélectionnée parmi :
dans laquelle ladite source de lumière (5) est intégrée dans ledit bras (3) ;
dans laquelle ladite source de lumière (5) est un élément séparé relié audit bras (3) par le biais de moyens de liaison tels que des vis, des attaches rapides et similaires.

5. Structure de phare (10) selon l'une quelconque des revendications précédentes, dans laquelle ladite source de lumière (5) est du type rechargeable par le biais d'un port USB ou alimentée par une batterie (8), de préférence ladite source de lumière étant une source à diodes électroluminescentes, DEL.

6. Bicyclette comprenant une structure de phare, selon l'une ou plusieurs des revendications précédentes, reliée au tube de selle.

7. Utilisation d'une structure de phare, selon l'une ou plusieurs des revendications 1 à 5 précédentes, reliée au tube de selle d'une bicyclette.
